(19) Europäisches Patentamt / European Patent Office / Office européen des brevets

(11) EP 2 671 915 B1

(12) **EUROPEAN PATENT SPECIFICATION**

(45) Date of publication and mention of the grant of the patent: **06.01.2016 Bulletin 2016/01**

(21) Application number: **12765397.0**

(22) Date of filing: **28.03.2012**

(51) Int Cl.:
***C08L 15/00*** *(2006.01)*
***B60C 1/00*** *(2006.01)*
***C08C 19/22*** *(2006.01)*
***C08F 236/10*** *(2006.01)*
***C08K 3/36*** *(2006.01)*
***C08K 5/548*** *(2006.01)*
***C08L 83/08*** *(2006.01)*
***C08C 19/44*** *(2006.01)*
***C08L 9/06*** *(2006.01)*

(86) International application number: **PCT/JP2012/058052**

(87) International publication number: **WO 2012/133478 (04.10.2012 Gazette 2012/40)**

(54) **RUBBER COMPOSITION FOR USE IN TIRES, AND PNEUMATIC TIRE**

KAUTSCHUKZUSAMMENSETZUNG FÜR REIFEN UND LUFTREIFEN DAMIT

COMPOSITION DE CAOUTCHOUC UTILISABLE DANS DES PNEUS, ET PNEU L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.03.2011 JP 2011073202**

(43) Date of publication of application: **11.12.2013 Bulletin 2013/50**

(73) Proprietor: **Sumitomo Rubber Industries, Ltd.**
**Kobe-shi, Hyogo 651-0072 (JP)**

(72) Inventors:
- **MINAGOSHI Akira**
**Kobe-shi**
**Hyogo 651-0072 (JP)**
- **UESAKA Kenichi**
**Kobe-shi**
**Hyogo 651-0072 (JP)**

(74) Representative: **Manitz, Finsterwald & Partner GbR**
**Martin-Greif-Strasse 1**
**80336 München (DE)**

(56) References cited:
**EP-A1- 1 911 797**
**EP-A1- 2 182 028**
**EP-A1- 2 213 477**
**EP-A1- 2 236 554**
**EP-A2- 2 177 562**
**EP-A2- 2 184 318**
**WO-A1-2010/126095**
**JP-A- 2006 232 917**
**JP-A- 2009 126 907**
**JP-A- 2009 263 420**
**JP-A- 2010 116 545**
**JP-A- 2010 116 546**
**JP-A- 2010 116 554**
**JP-A- 2010 116 556**
**JP-A- 2010 189 613**
**JP-A- 2010 260 920**
**JP-A- 2010 280 811**
**JP-A- 2011 032 402**
**US-A1- 2004 116 635**
**US-A1- 2005 277 717**
**US-A1- 2008 161 458**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 671 915 B1

## Description

TECHNICAL FIELD

The present invention relates to a rubber composition for a tire, and a pneumatic tire using the same.

BACKGROUND ART

The fuel economy of vehicles has been improved by decreasing the rolling resistance (or improving the performance in terms of rolling resistance) of tires. These days, better fuel economy is increasingly required of vehicles, and very low heat build-up is required of rubber compositions for producing tread. Tread is a tire component that accounts for a large portion of a tire.
A method of reducing the amount of reinforcing filler is known as the method for enabling a rubber composition to have sufficiently low heat build-up. However, in the case of this method, the hardness of the rubber composition may be decreased, causing a decrease in handling performance (handling stability), wet grip performance, and abrasion resistance.
A method of replacing carbon black used as a reinforcing filler by silica is also known. However, because silica contains a hydrophilic silanol group on its surface, it has lower compatibility with rubber (particularly, natural rubber, butadiene rubber, styrene butadiene rubber, and the like, which are commonly used for tires), compared to carbon black. In some cases, silica is sometimes inferior to carbon black in terms of abrasion resistance and mechanical strength (tensile strength and elongation at break).
Patent Literature 1 discloses a rubber composition for a tire, wherein the rubber composition results in a significant improvement in wet grip performance because it contains both anhydrous silica and hydrous silica. However, such a rubber composition leaves room for improvement in terms of fuel economy and abrasion resistance in addition to wet grip performance.
EP 2 184 318 A2 discloses a rubber composition including a rubber component that contains at least 5 % by weight of a specifically modified styrene-butadiene rubber, whereas EP 2 182 028 A1 relates to a rubber composition including a respectively modified butadiene rubber. A similar rubber composition as that disclosed in EP 2 184 318 A2 is known from EP 2 213 477 A1.
EP 2 177 562 A2 discloses a polymer obtainable by copolymerizing a conjugated diene compound and/or an aromatic vinyl compound with a specific modification agent.
US 2004/116635 A1 relates to a process for manufacturing a modified terpolymer.
WO 2010/126095 A1 discloses a rubber composition for a tire tread including a specific silane coupling agent.
EP 2 236 554 A1, JP 2006-232917 A, US 2005/0277717 A1, US 2008/161458 A1 and EP 1 911 797 A1 describe silane coupling agents not containing a SH-group.

CITATION LIST

PATENT LITERATURE

Patent Literature 1: JP-A 2003-192842

SUMMARY OF INVENTION

TECHNICAL PROBLEM

The present invention aims to provide a rubber composition for a tire, which makes it possible to solve the above problems and improve fuel economy, wet grip performance, and abrasion resistance; and a pneumatic tire using the rubber composition.

SOLUTION TO PROBLEM

The present invention relates to a rubber composition for a tire, including:

a rubber component including a modified styrene butadiene rubber that contains a constitutional unit derived from a nitrogen-containing compound in a main chain; silica; and at least one silane coupling agent,
the nitrogen-containing compound being represented by the following formula:

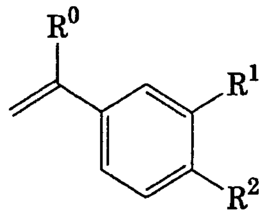

wherein $R^0$ represents a hydrogen atom, a C1-C30 aliphatic hydrocarbon group, a C3-C30 alicyclic hydrocarbon group, or a C5-C30 aromatic hydrocarbon group; $R^1$ and $R^2$ are the same or different and each represent a hydrogen atom,

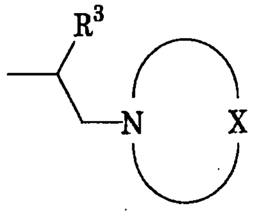

,

or

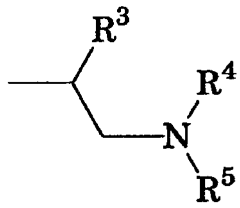

,

provided that at least one of $R^1$ and $R^2$ is not a hydrogen atom; $R^3$ represents a hydrogen atom or a C1-C4 hydrocarbon group; X represents a divalent saturated hydrocarbon group optionally containing nitrogen, oxygen, or sulfur, and optionally substituted with

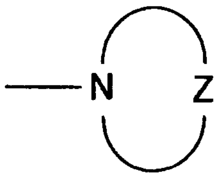

or

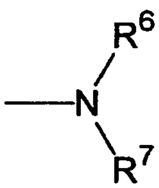

wherein Z represents a divalent saturated hydrocarbon group optionally containing nitrogen, oxygen, or sulfur; and $R^4$ to $R^7$ are the same or different and each represent a hydrogen atom, a C1-C30 aliphatic hydrocarbon group, a C3-C30 alicyclic hydrocarbon group, a C5-C30 aromatic hydrocarbon group, or a heterocyclic group having 3 to 30 ring member atoms, and

the at least one silane coupling agent being selected from the group consisting of a silane coupling agent represented by the following formula (1) and a silane coupling agent containing linking units A represented by the following formula (2) and linking units B represented by the following formula (3):

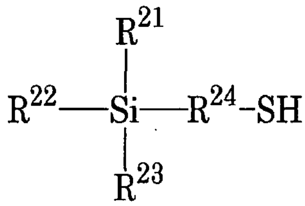

(1)

wherein $R^{21}$ represents a group represented by $-O-(R^{25}-O)_t-R^{26}$ in which t pieces of $R^{25}$ are the same or different and each represent a branched or unbranched C1-C30 divalent hydrocarbon group; $R^{26}$ represents a branched or unbranched C1-C30 alkyl group, a branched or unbranched C2-C30 alkenyl group, a C6-C30 aryl group, or a C7-C30 aralkyl group; and t represents an integer of 1 to 30; $R^{22}$ and $R^{23}$ are the same or different and each represent a group as defined for $R^{21}$, a branched or unbranched C1-C12 alkyl group, or a group represented by $-O-R^{27}$ in which $R^{27}$ represents a hydrogen atom, a branched or unbranched C1-C30 alkyl group, a branched or unbranched C2-C30 alkenyl group, a C6-C30 aryl group, or a C7-C30 aralkyl group; and $R^{24}$ represents a branched or unbranched C1-C30 alkylene group;

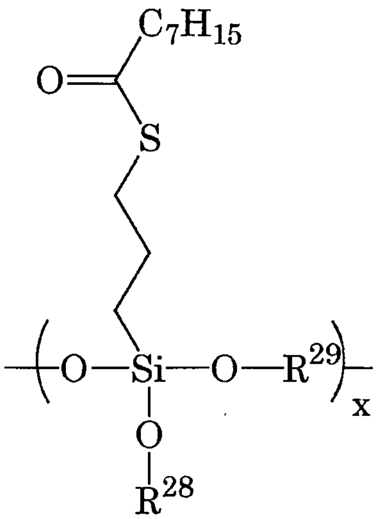

(2)

and

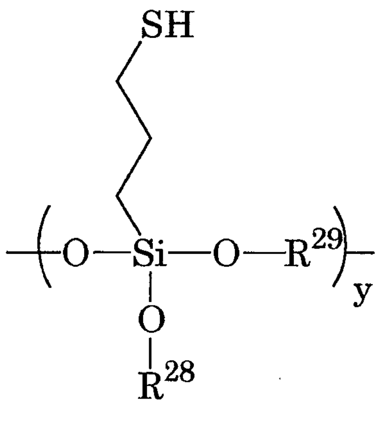

(3)

wherein x is an integer of 0 or greater; y is an integer of 1 or greater; $R^{28}$ represents a hydrogen atom, a halogen atom, a branched or unbranched C1-C30 alkyl or alkylene group, a branched or unbranched C2-C30 alkenyl or alkenylene group, a branched or unbranched C2-C30 alkynyl or alkynylene group, or the alkyl or alkenyl group that is terminally substituted with a hydroxy or carboxyl group; $R^{29}$ represents a hydrogen atom, a branched or unbranched C1-C30 alkylene or alkyl group, a branched or unbranched C2-C30 alkenylene or alkenyl group, or a branched or unbranched C2-C30 alkynylene or alkynyl group; and a pair of $R^{28}$ and $R^{29}$ may form a ring structure.

The modified styrene butadiene rubber is preferably contained in an amount of 5% by mass or more based on 100% by mass of the rubber component. Also, the modified styrene butadiene rubber is preferably a polymer in which

at least one terminal is further modified by a modifier containing a functional group containing at least one selected from the group consisting of nitrogen, oxygen, and silicon.

The rubber composition is preferably for use in a tread.

The present invention also relates to a pneumatic tire, formed from the rubber composition.

ADVANTAGEOUS EFFECTS OF INVENTION

The rubber composition of the present invention contains a specific modified styrene butadiene rubber, silica, and a specific silane coupling agent, and therefore improves in fuel economy, wet grip performance, and abrasion resistance.

DESCRIPTION OF EMBODIMENTS

The rubber composition of the present invention includes:

a rubber component including a modified styrene butadiene rubber (modified SBR) that contains a constitutional unit derived from a nitrogen-containing compound in a main chain; silica; and at least one silane coupling agent, the nitrogen-containing compound being represented by the following formula:

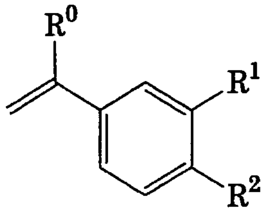

wherein $R^0$ represents a hydrogen atom, a C1-C30 aliphatic hydrocarbon group, a C3-C30 alicyclic hydrocarbon group, or a C5-C30 aromatic hydrocarbon group; $R^1$ and $R^2$ are the same or different and each represent a hydrogen atom,

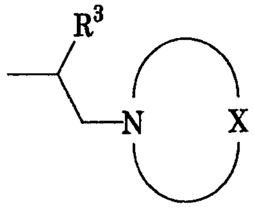

or

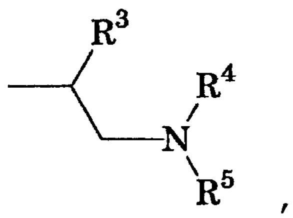

provided that at least one of $R^1$ and $R^2$ is not a hydrogen atom; $R^3$ represents a hydrogen atom or a C1-C4 hydrocarbon group; X represents a divalent saturated hydrocarbon group optionally containing nitrogen, oxygen, or sulfur, and optionally substituted with

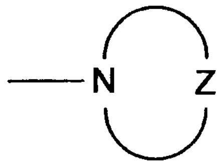

or

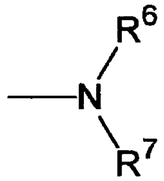

wherein Z represents a divalent saturated hydrocarbon group optionally containing nitrogen, oxygen, or sulfur; and $R^4$ to $R^7$ are the same or different and each represent a hydrogen atom, a C1-C30 aliphatic hydrocarbon group, a C3-C30 alicyclic hydrocarbon group, a C5-C30 aromatic hydrocarbon group, or a heterocyclic group having 3 to 30 ring member atoms, and

the at least one silane coupling agent being selected from the group consisting of a silane coupling agent represented by the following formula (1) and a silane coupling agent containing linking units A represented by the following formula (2) and linking units B represented by the following formula (3):

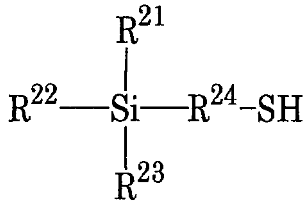

(1)

wherein $R^{21}$ represents a group represented by -O- $(R^{25}\text{-}O)_t\text{-}R^{26}$ in which t pieces of $R^{25}$ are the same or different and each represent a branched or unbranched C1-C30 divalent hydrocarbon group; $R^{26}$ represents a branched or unbranched C1-C30 alkyl group, a branched or unbranched C2-C30 alkenyl group, a C6-C30 aryl group, or a C7-C30 aralkyl group; and t represents an integer of 1 to 30); $R^{22}$ and $R^{23}$ are the same or different and each represent a group as defined for $R^{21}$, a branched or unbranched C1-C12 alkyl group, or a group represented by $-O-R^{27}$ in which $R^{27}$ represents a hydrogen atom, a branched or unbranched C1-C30 alkyl group, a branched or unbranched C2-C30 alkenyl group, a C6-C30 aryl group, or a C7-C30 aralkyl group; and $R^{24}$ represents a branched or unbranched C1-C30 alkylene group;

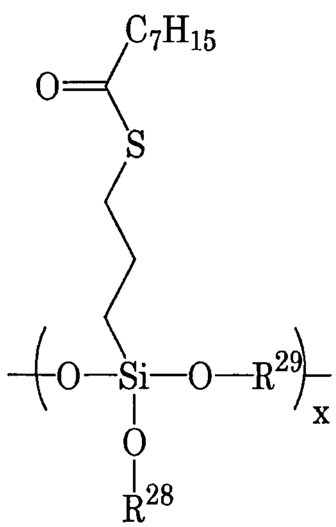

(2)

and

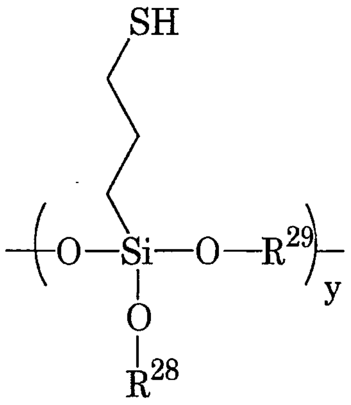

(3)

wherein x is an integer of 0 or greater; y is an integer of 1 or greater; $R^{28}$ represents a hydrogen atom, a halogen atom, a branched or unbranched C1-C30 alkyl or alkylene group, a branched or unbranched C2-C30 alkenyl or alkenylene group, a branched or unbranched C2-C30 alkynyl or alkynylene group, or the alkyl or alkenyl group that is terminally substituted with a hydroxy or carboxyl group; $R^{29}$ represents a hydrogen atom, a branched or unbranched C1-C30 alkylene or alkyl group, a branched or unbranched C2-C30 alkenylene or alkenyl group, or a branched or unbranched C2-C30 alkynylene or alkynyl group; and a pair of $R^{28}$ and $R^{29}$ may form a ring structure.

The combined use of the above-described components allows good dispersion of silica and results in excellent fuel economy and abrasion resistance, as well as high wet grip performance. In particular, the combined use has a significant improvement effect on fuel economy and abrasion resistance, and these excellent fuel economy and abrasion resistance lead to environmentally-friendliness. In addition, the combined use provides excellent handling stability as well as good dry grip performance, mechanical strength, and processability.

Examples of the modified SBR include those mentioned in JP-A 2010-116545 and JP-A 2010-116546.

Examples of the saturated hydrocarbon group represented by X which contains nitrogen, oxygen, or sulfur include $(CR^{10}R^{11})_m$-$NR^{12}$- $(CR^{13}R^{14})_n$, $(CR^{10}R^{11})_m$-O-$(CR^{13}R^{14})_n$, and $(CR^{10}R^{11})_m$-S-$(CR^{13}R^{14})_n$. $R^{10}$ to $R^{14}$ are the same or different and each represent a hydrogen atom, a C1-C30 (preferably C1-C5) aliphatic hydrocarbon group, a C3-C30 (preferably C3-C10) alicyclic hydrocarbon group, or a C5-C30 (preferably C5-C10) aromatic hydrocarbon group. Herein, m and n each represent an integer of 1 to 9 (preferably 1 to 6). When m is 2 or greater, the multiple $(CR^{10}R^{11})_s$ may be the same or different. When n is 2 or greater, the multiple $(CR^{13}R^{14})$s may be the same or different.

Examples of the saturated hydrocarbon group represented by Z which contains nitrogen, oxygen, or sulfur include those mentioned for the saturated hydrocarbon group represented by X.

For better dispersion of silica, $R^0$ is preferably a hydrogen atom or a C1 or C2 aliphatic hydrocarbon group. $R^3$ is preferably a hydrogen atom or a C1 or C2 hydrocarbon group. $R^4$ to $R^7$ each are preferably an aliphatic hydrocarbon group, an aromatic hydrocarbon group, or a heterocyclic group; and more preferably an aliphatic hydrocarbon group. $R^{10}$ to $R^{14}$ each are preferably a hydrogen atom or a C1 or C2 aliphatic hydrocarbon group.

The modified SBR is a copolymer produced by copolymerizing styrene, butadiene (1,3-butadiene), and a nitrogen-containing compound (monomer) represented by the above formula, and contains a constitutional unit derived from the nitrogen-containing compound in a main chain portion. The "main chain portion" as used herein is a concept that encompasses the terminal portions.

Examples of the nitrogen-containing compound represented by the above formula include 3- or 4- (2-azetidinoethyl) styrene, 3- or 4-(2-pyrrolidinoethyl)styrene, 3- or 4-(2-piperidinoethyl)styrene, and 3- or 4-(2-hexamethyleneiminoethyl)styrene. These compounds may be used alone or in combinations of two or more. For better dispersion of silica, 3- or 4-(2-pyrrolidinoethyl)styrene is preferred.

The modified SBR preferably has at least one terminal that is modified by a modifier that contains a functional group containing at least one selected from the group consisting of nitrogen, oxygen, and silicon, and more preferably has both terminals modified by the modifier. This increases the effect to improve various performances.

Examples of functional groups in the modifier include amino, amide, alkoxysilyl, isocyanate, imino, imidazole, urea, ether, carbonyl, carboxyl, hydroxyl, nitrile, and pyridyl groups. Preferred among these are amino and alkoxysilyl groups. Examples of the modifier include 3-(N,N-dimethylamino)propyltrimethoxysilane, 3-(N,N-diethylaminopropyl)trimethoxysilane, 3-(N,N-dimethylamino)propyltriethoxysilane, 3-(N,N-diethylaminopropyl)triethoxysilane, 3-glycidoxypropyltrimethoxysilane, 2-(4-pyridylethyl)triethoxysilane, N-(3-triethoxysilylpropyl)-4,5-dihydroimidazole, and silicon tetrachloride. Among these, 3-(N,N-dimethylamino)propyltrimethoxysilane is preferred because a resulting product is excellent in fuel economy, wet grip performance, and abrasion resistance.

The amount of the nitrogen-containing compound in the modified SBR is preferably 0.05% by mass or more, and more preferably 0.1% by mass or more. An amount of less than 0.05% by mass is less likely to exert an improving effect on fuel economy and wet grip performance. The amount of the nitrogen-containing compound in the modified SBR is preferably 30% by mass or less, more preferably 20% by mass or less, and still more preferably 5% by mass or less. An amount of more than 30% by mass is less likely to produce an effect commensurate with the increased cost.

The amount of the nitrogen-containing compound described herein is determined by a method described in the examples (described later).

The weight average molecular weight (Mw) of the modified SBR is preferably $1.0 \times 10^5$ or more, and more preferably $2.0 \times 10^5$ or more. An Mw of less than $1.0 \times 10^5$ tends to deteriorate fuel economy and abrasion resistance. The Mw is preferably $2.0 \times 10^6$ or less, and more preferably $1.5 \times 10^6$ or less. An Mw of more than $2.0 \times 10^6$ tends to deteriorate processability.

Herein, the weight average molecular weight (Mw) is determined by a method described in the examples (described later).

The amount of the modified SBR, based on 100% by mass of the rubber component, is preferably 5% by mass or more, more preferably 10% by mass or more, and still more preferably 20% by mass or more. An amount of less than 5% by mass may fail to improve fuel economy. The upper limit of the amount of the modified SBR is not particularly limited and is preferably 90% by mass or less, more preferably 80% by mass or less, and still more preferably 75% by mass or less. The modified SBR in an amount of more than 90% by mass tends to result in extremely deteriorated tensile strength at break.

In the present invention, the rubber component of the rubber composition preferably contains diene rubber in addition to the modified SBR. Diene rubbers include natural rubbers and/or synthetic diene rubbers. Examples of synthetic diene rubbers include isoprene rubber (IR), butadiene rubber (BR), styrene butadiene rubber (SBR), acrylonitrile-butadiene rubber (NBR), chloroprene rubber (CR), and butyl rubber (IIR). Preferred among these are NR, BR, and SBR because these rubbers show a good balance of grip performance and abrasion resistance.

The amount of NR, based on 100% by mass of the rubber component, is preferably 10% by mass or more, and more preferably 20% by mass or more. The addition of NR in an amount of less than 10% by mass tends to fail to produce its effects sufficiently. The amount of NR is preferably 70% by mass or less, and more preferably 50% by mass or less. An amount of more than 70% by mass results in a reduction of the amount of the modified SBR. Consequently, the dispersibility of silica tends to be deteriorated.

The rubber composition of the present invention contains silica as a reinforcing agent. Non-limiting examples of silica include dry-process silica (anhydrous silica) and wet-process silica (hydrous silica). Wet-process silica is preferred because it has many silanol groups. These silicas may be used alone or in combinations of two or more.

The nitrogen adsorption specific surface area ($N_2SA$) of silica is preferably 100 $m^2/g$ or larger, and more preferably 150 $m^2/g$ or larger. An $N_2SA$ of smaller than 100 $m^2/g$ tends to result in a small reinforcing effect and deteriorate abrasion resistance. The $N_2SA$ of silica is preferably 300 $m^2/g$ or smaller, and more preferably 200 $m^2/g$ or smaller. An $N_2SA$ of larger than 300 $m^2/g$ tends to decrease the dispersibility of silica and deteriorate fuel economy.

The $N_2SA$ of silica is determined by the BET method in accordance with ASTM D3037-81.

The amount of silica is preferably 10 parts by mass or more, more preferably 20 parts by mass or more, and still more preferably 50 parts by mass or more, per 100 parts by mass of the rubber component. An amount of less than 10 parts by mass may result in insufficient wet grip performance and abrasion resistance. The amount of silica is preferably 150 parts by mass or less, and more preferably 120 parts by mass or less. Silica tends to be less dispersible when the amount thereof exceeds 150 parts by mass, thus deteriorating processability and fuel economy.

The rubber composition of the present invention contains a silane coupling agent represented by the following formula (1) and/or a silane coupling agent containing linking units A represented by the following formula (2) and linking units B represented by the following formula (3).

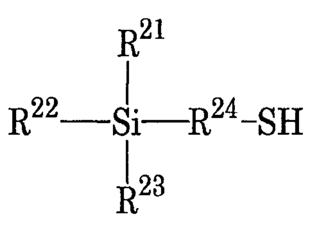

(1)

In formula (1), $R^{21}$ represents a group represented by -O- $(R^{25}\text{-O})_t$-$R^{26}$ (t pieces of $R^{25}$ are the same or different and each represent a branched or unbranched C1-C30 divalent hydrocarbon group; $R^{26}$ represents a branched or unbranched C1-C30 alkyl group, a branched or unbranched C2-C30 alkenyl group, a C6-C30 aryl group, or a C7-C30

aralkyl group; and t represents an integer of 1 to 30); $R^{22}$ and $R^{23}$ are the same or different and each represent a group as defined for $R^{21}$, a branched or unbranched C1-C12 alkyl group, or a group represented by -O-$R^{27}$ ($R^{27}$ represents a hydrogen atom, a branched or unbranched C1-C30 alkyl group, a branched or unbranched C2-C30 alkenyl group, a C6-C30 aryl group, or a C7-C30 aralkyl group); and $R^{24}$ represents a branched or unbranched C1-C30 alkylene group.

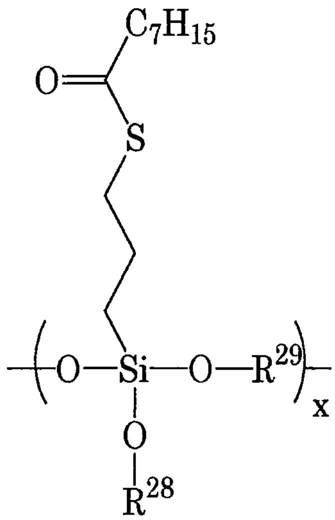
(2)

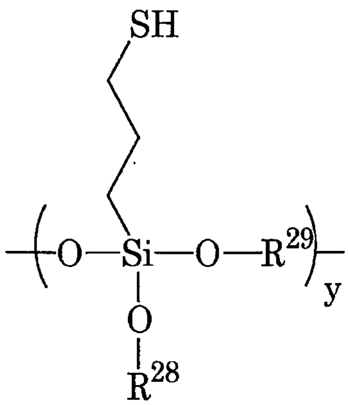
(3)

In formulae (2) and (3), x is an integer of 0 or greater; y is an integer of 1 or greater; $R^{28}$ represents a hydrogen atom, a halogen atom, a branched or unbranched C1-C30 alkyl or alkylene group, a branched or unbranched C2-C30 alkenyl or alkenylene group, a branched or unbranched C2-C30 alkynyl or alkynylene group, or the alkyl or alkenyl group that is terminally substituted with a hydroxy or carboxyl group; $R^{29}$ represents a hydrogen atom, a branched or unbranched C1-C30 alkylene or alkyl group, a branched or unbranched C2-C30 alkenylene or alkenyl group, or a branched or unbranched C2-C30 alkynylene or alkynyl group; and a pair of $R^{28}$ and $R^{29}$ may form a ring structure.

The use of the silane coupling agent represented by formula (1) results in excellent fuel economy and high grip performance.

$R^{21}$ in formula (1) represents a group represented by -O- $(R^{25}\text{-O})_t\text{-}R^{26}$ in which t pieces of $R^{25}$ are the same or different and each represent a branched or unbranched C1-C30 divalent hydrocarbon group; $R^{26}$ represents a branched or unbranched C1-C30 alkyl group, a branched or unbranched C2-C30 alkenyl group, a C6-C30 aryl group, or C7-C30 aralkyl group; and t represents an integer of 1 to 30.

$R^{25}$s are the same or different and each represent a branched or unbranched C1-C30 (preferably C1-C10, more preferably C1-C3) divalent hydrocarbon group.

Examples of the hydrocarbon group include branched or unbranched C1-C30 alkylene groups, branched or unbranched C2-C30 alkenylene groups, branched or unbranched C2-C30 alkynylene groups, and C6-C30 arylene groups. Among these, the alkylene groups are preferred because they easily bind to (react with) silica and can sufficiently improve fuel economy and abrasion resistance.

Examples of branched or unbranched C1-C30 (preferably C1-C10, more preferably C1-C3) alkylene groups represented by $R^{25}$ include methylene, ethylene, propylene, butylene, pentylene, hexylene, heptylene, octylene, nonylene, decylene, undecylene, dodecylene, tridecylene, tetradecylene, pentadecylene, hexadecylene, heptadecylene,

and octadecylene groups.

Examples of branched or unbranched C2-C30 (preferably C2-C15, more preferably C2 or C3) alkenylene groups represented by $R^{25}$ include vinylene, 1-propenylene, 2-propenylene, 1-butenylene, 2-butenylene, 1-pentenylene, 2-pentenylene, 1-hexenylene, 2-hexenylene, and 1-octenylene groups.

Examples of branched or unbranched C2-C30 (preferably C2-C15, more preferably C2 or C3) alkynylene groups represented by $R^{25}$ include ethynylene, propynylene, butynylene, pentynylene, hexynylene, heptynylene, octynylene, nonynylene, decynylene, undecynylene, and dodecynylene groups.

Examples of C6-C30 (preferably C6-C15) arylene groups represented by $R^{25}$ include phenylene, tolylene, xylylene, and naphthylene groups.

The letter "t" represents an integer of 1 to 30 (preferably 2 to 20 and more preferably 5 or 6). When t is 0, it is disadvantageous in terms of bonding (reaction) with silica. When t is 31 or greater, it results in reduced reactivity with silica, which is disadvantageous in terms of process efficiency.

$R^{26}$ represents a branched or unbranched C1-C30 alkyl group, a branched or unbranched C2-C30 alkenyl group, a C6-C30 aryl group, or a C7-C30 aralkyl group. The branched or unbranched C1-C30 alkyl group is particularly preferred for good reactivity with silica.

Examples of branched or unbranched C1-C30 (preferably C3-C25, more preferably C10-C15) alkyl groups represented by $R^{26}$ include methyl, ethyl, n-propyl, isopropyl, n-butyl, iso-butyl, sec-butyl, tert-butyl, pentyl, hexyl, heptyl, 2-ethylhexyl, octyl, nonyl, decyl, undecyl, dodecyl, tridecyl, tetradecyl, pentadecyl, and octadecyl groups.

Examples of branched or unbranched C2-C30 (preferably C3-C25, more preferably C10-C15) alkenyl groups represented by $R^{26}$ include vinyl, 1-propenyl, 2-propenyl, 1-butenyl, 2-butenyl, 1-pentenyl, 2-pentenyl, 1-hexenyl, 2-hexenyl, 1-octenyl, decenyl, undecenyl, dodecenyl, tridecenyl, tetradecenyl, pentadecenyl, and octadecenyl groups.

Examples of C6-C30 (preferably C10-C20) aryl groups represented by $R^{26}$ include phenyl, tolyl, xylyl, naphthyl, and biphenyl groups.

Examples of C7-C30 (preferably C10-C20) aralkyl groups represented by $R^{26}$ include benzyl and phenethyl groups.

Specific examples of $R^{21}$ in formula(1) include $-O-(C_2H_4-O)_5-C_{11}H_{23}$, $-O-(C_2H_4-O)_5-C_{12}H_{25}$, $-O-(C_2H_4-O)_5-C_{13}H_{27}$, $-O-(C_2H_4-O)_5-C_{14}H_{29}$, $-O-(C_2H_4-O)_5-C_{15}H_{31}$, $-O-(C_2H_4-O)_3-C_{13}H_{27}$, $-O-(C_2H_4-O)_4-C_{13}H_{27}$, $-O-(C_2H_4-O)_6-C_{13}H_{27}$, and $-O-(C_2H_4-O)_7-C_{13}H_{27}$. Preferred among these are $-O-(C_2H_4-O)_5-C_{11}H_{23}$, $-O-(C_2H_4-O)_5-C_{13}H_{27}$, $-O-(C_2H_4-O)_5-C_{15}H_{31}$, and $-O-(C_2H_4-O)_6-C_{13}H_{27}$.

$R^{22}$ and $R^{23}$ are the same or different and each represent a group as defined for $R^{21}$ (i.e., a group represented by $-O-(R^{25}-O)_t-R^{26}$), a branched or unbranched C1-C12 alkyl group, or a group represented by $-O-R^{27}$ in which $R^{27}$ represents a hydrogen atom, a branched or unbranched C1-C30 alkyl group, a branched or unbranched C2-C30 alkenyl group, a C6-C30 aryl group, or C7-C30 aralkyl group. Among these, the groups represented by $R^{21}$ and groups represented by $-O-R^{27}$ (where $R^{27}$ is a branched or unbranched C1-C30 alkyl group) are preferred for good reactivity with silica.

Examples of branched or unbranched C1-C12 (preferably C1-C10, more preferably C1-C8) alkyl groups represented by $R^{22}$ and $R^{23}$ include methyl, ethyl, n-propyl, isopropyl, n-butyl, iso-butyl, sec-butyl, tert-butyl, pentyl, hexyl, heptyl, 2-ethylhexyl, octyl, and nonyl groups.

Examples of branched or unbranched C1-C30 (preferably C1-C10, more preferably C1-C3) alkyl groups represented by $R^{27}$ include those of the branched or unbranched C1-C30 alkyl groups represented by $R^{26}$.

Examples of branched or unbranched C2-C30 (preferably C2 to 10, more preferably C2-C5) alkenyl groups represented by $R^{27}$ include those of the branched or unbranched C2-C30 alkenyl groups represented by $R^{26}$.

Examples of C6-C30 (preferably C6-C12) aryl groups represented by $R^{27}$ include those of the C6-C30 aryl groups represented by $R^{26}$.

Examples of C7-C30 (preferably C7-C13) aralkyl groups represented by $R^{27}$ include those of the C7-C30 aralkyl groups represented by $R^{26}$.

Specific examples of $R^{22}$ and $R^{23}$ in formula (1) include $-O-(C_2H_4-O)_5-C_{11}H_{23}$, $-O-(C_2H_4-O)_5-C_{12}H_{25}$. $-O-(C_2H_4-O)_5-C_{13}H_{27}$, $-O-(C_2H_4-O)_5-C_{14}H_{29}$, $-O-(C_2H_4-O)_5-C_{15}H_{31}$, $-O-(C_2H_4-O)_3-C_{13}H_{27}$, $-O-(C_2H_4-O)_4-C_{13}H_{27}$, $-O-(C_2H_4-O)_6-C_{13}H_{27}$, $-O-(C_2H_4-O)_7-C_{13}H_{27}$, $C_2H_5-O-$, $CH_3-O-$, and $C_3H_7-O-$. Preferred among these are $-O-(C_2H_4-O)_5-C_{11}H_{23}$, $-O-(C_2H_4-O)_5-C_{13}H_{27}$, $-O-(C_2H_4-O)_5-C_{15}H_{31}$, $-O-(C_2H_4-O)_6-C_{13}H_{27}$, and $C_2H_5-O-$.

Examples of the branched or unbranched C1-C30 (preferably C1-C10, more preferably C1-C5) alkylene group for $R^{24}$ include the same groups as mentioned for the branched or unbranched C1-C30 alkylene group represented by $R^{25}$.

Examples of the silane coupling agent represented by formula (1) include Si363 available from Degussa. These silane coupling agents may be used alone or in combinations of two or more.

The use of the silane coupling agent containing the linking units B represented by formula (3) and optionally the linking units A represented by formula (2) leads to improved fuel economy and abrasion resistance as compared with conventional silane coupling agents such as bis(3-triethoxysilylpropyl)tetrasulfide.

The silane coupling agent containing the linking units A and the linking units B is preferably obtained by copolymerizing the linking unit B in a proportion of 1 to 70 mol% of the total amount of the linking units A and the linking units B.

The silane coupling agent having a molar ratio of the linking unit A and the linking unit B in the above range suppresses an increase in viscosity during the processing, as compared with polysulfide silane such as bis-(3-triethoxysilylpropyl)tetrasulfide. This is probably due to the fact that the sulfide portion of the linking unit A is a C-S-C bond and is thus thermally more stable compared with tetrasulfide or disulfide, which consequently reduces an increase in Mooney viscosity.

The silane coupling agent having a molar ratio of the linking unit A and the linking unit B in the above range suppresses a reduction in scorch time as compared with mercaptosilanes such as 3-mercaptopropyltrimethoxysilane. This is probably due to the fact that although the linking unit B has a mercaptosilane structure, the -SH group of the linking unit B is covered with the $-C_7H_{15}$ moiety of the linking unit A, as a result of which the -SH group is less likely to react with polymers, and therefore scorching is less likely to occur.

Examples of the halogen atom represented by $R^{28}$ include chlorine, bromine, and fluorine.

Examples of branched or unbranched C1-C30 (preferably C1-C12, more preferably C1-C5) alkyl groups represented by $R^{28}$ and $R^{29}$ include those of the branched or unbranched C1-C30 alkyl groups represented by $R^{26}$.

Examples of branched or unbranched C1-C30 (preferably C1-C12) alkylene groups represented by $R^{28}$ and $R^{29}$ include groups those of the branched or unbranched C1-C30 alkylene groups represented by $R^{25}$.

Examples of branched or unbranched C2-C30 (preferably C2-C12) alkenyl groups represented by $R^{28}$ and $R^{29}$ include those of the branched or unbranched C2-C30 alkenyl groups represented by $R^{26}$.

Examples of branched or unbranched C2-C30 (preferably C2-C12) alkenylene groups represented by $R^{28}$ and $R^{29}$ include those of the branched or unbranched C2-C30 alkenylene groups represented by $R^{25}$.

Examples of branched or unbranched C2-C30 (preferably C2-C12) alkynyl groups represented by $R^{28}$ and $R^{29}$ include ethynyl, propynyl, butynyl, pentynyl, hexynyl, heptynyl, octynyl, nonynyl, decynyl, undecynyl, and dodecynyl groups.

Examples of branched or unbranched C2-C30 (preferably C2-C12) alkynylene groups represented by $R^{28}$ and $R^{29}$ include those of the branched or unbranched C2-C30 alkynylene groups represented by $R^{25}$.

In regard to the silane coupling agent containing the linking unit A and the linking unit B, the total repeating number (x + y) of the repeating number (x) of the linking unit A and the repeating number (y) of the linking unit B is preferably in the range of 3 to 300. When the total repeating number is in that range and x is 1 or greater, the mercaptosilane of the linking unit B is covered with the $-C_7H_{15}$ moiety of the linking unit A. This suppresses a reduction in scorch time, and ensures good reactivity with silica and the rubber component.

Examples of the silane coupling agent containing the linking unit A and the linking unit B include NXT-Z30, NXT-Z45, NXT-260, and NXT-Z100, all available from Momentive. These may be used alone or in combinations of two or more.

The amount of the silane coupling agent is preferably 3 parts by mass or more, more preferably 6 parts by mass or more, and still more preferably 8 parts by mass or more, per 100 parts by mass of silica. An amount of less than 3 parts by mass tends to result in significantly reduced tensile strength at break. Also, the amount of the silane coupling agent is preferably 15 parts by mass or less, and more preferably 10 parts by mass or less. The addition of the silane coupling agent in an amount of more than 15 parts by mass is unlikely to produce its effects such as increased tensile strength at break and reduced rolling resistance.

In the case where two or more types of silane coupling agents are concurrently used, the above-described amount refers to the total amount.

In addition to the above-described components, additives commonly used in production of rubber compositions can be appropriately added in the rubber composition of the present invention. Examples of such additives include reinforcing fillers such as carbon black and clay; antioxidants; processing aids such as zinc oxide, stearic acid, oils, waxes, and polyethylene glycol; vulcanizing agents such as sulfur; and vulcanization accelerators.

The carbon black preferably has a nitrogen adsorption specific surface area ($N_2SA$) of 30 $m^2/g$ or larger, and more preferably 90 $m^2/g$ or larger. An $N_2SA$ of smaller than 30 $m^2/g$ tends to result in insufficient reinforcement and abrasion resistance. The carbon black preferably has a $N_2SA$ of 180 $m^2/g$ or smaller, and more preferably 130 $m^2/g$ or smaller. The carbon black having an $N_2SA$ larger than 180 $m^2/g$ tends to have poor dispersibility and thereby increase heat build-up.

The $N_2SA$ of carbon black is determined in accordance with JIS K 6217-2:2001.

The amount of carbon black is preferably 2 parts by mass or more, and more preferably 5 parts by mass or more, per 100 parts by mass of the rubber component. The amount is preferably 20 parts by mass or less, and more preferably 15 parts by mass or less. An amount of less than 2 parts by mass tends to deteriorate processability. Conversely, an amount of more than 20 parts by mass tends to cause deterioration in wet grip performance and low heat build-up.

The total amount of silica and carbon black is preferably 20 parts by mass or more, and more preferably 60 parts by mass or more, per 100 parts by mass of the rubber component. A total amount of less than 20 parts by mass may result in insufficient fuel economy, wet grip performance, and abrasion resistance. The total amount is preferably 160 parts by mass or less, and more preferably 120 parts by mass or less. A total amount of more than 160 parts by

mass tends to deteriorate fuel economy.

The silica content, based on a total of 100% by mass of silica and carbon black, is preferably 30% by mass or more, more preferably 60% by mass or more, and still more preferably 80% by mass or more. The silica content is preferably 95% by mass or less, and more preferably 90% by mass or less. The effects of the present invention can be favorably achieved when the silica content is in that range.

Examples of oils include process oils, vegetable fats and oils, and mixtures thereof. Examples of process oils include paraffinic process oil, aromatic process oil, and naphthenic process oil. Examples of vegetable fats and oils include castor oil, cottonseed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil.

In the case where the rubber composition contains oil, the amount of oil is preferably 5 parts by mass or more, and more preferably 15 parts by mass or more, per 100 parts by mass of the rubber component. An amount of less than 5 parts by mass may result in insufficient grip performance. The amount of oil is preferably 30 parts by mass or less, and more preferably 25 parts by mass or less. An amount of more than 30 parts by mass tends to deteriorate fuel economy and abrasion resistance.

The rubber composition of the present invention is produced by an ordinary method. For example, the rubber composition can be produced by a method of kneading the above components by a Banbury mixer, a kneader, an open roll mill or the like, and vulcanizing the resulting mixture. The rubber composition of the present invention can be used for any tire components and can be particularly suitably used for treads (particularly, cap tread).

The pneumatic tire of the present invention is produced by an ordinary method using the rubber composition described above. Specifically, an unvulcanized rubber composition containing the above-described components is extruded and processed according to the shape of each tire component such as tread; and assembled with other tire components by an ordinary method in a tire building machine to form of an unvulcanized tire. The unvulcanized tire is then heated and pressed in a vulcanizer into a tire.

The pneumatic tire of the present invention is suitably used as a passenger vehicle tire.

## EXAMPLES

The present invention will be described in detail based on examples, but is not limited to these examples.

The chemical agents used in synthesis of monomer (1) are listed below.

Cyclohexane: available from Kanto Chemical Co., Inc.
Pyrrolidine: available from Kanto Chemical Co., Inc.
Divinylbenzene: available from Sigma-Aldrich Japan K.K.
1.6 M solution of n-butyllithium in hexane: available from Kanto Chemical Co., Inc.
Isopropanol: available from Kanto Chemical Co., Inc.

### Preparation 1 (synthesis of monomer (1))

A 100-mL vessel in which the air was sufficiently replaced by nitrogen was charged with 50 mL of cyclohexane, 4.1 mL (3.6 g) of pyrrolidine, and 6.5 g of divinylbenzene. Further, 0.7 mL of a 1.6 M solution of n-butyllithium in hexane was added to the vessel at 0°C, and the mixture was stirred.

After one hour, isopropanol was added thereto to terminate the reaction. The resulting mixture was subjected to extraction and purification so as to obtain monomer (1).

The chemical agents used in synthesis of polymers (1) and (2) are listed below.

Cyclohexane: available from Kanto Chemical Co., Inc.
Styrene: available from Kanto Chemical Co., Inc.
Butadiene: available from Takachiho Chemical Industrial Co., Ltd.
Tetramethylethylenediamine: available from Kanto Chemical Co., Inc.
1.6 M solution of n-butyllithium in hexane: available from Kanto Chemical Co., Inc.
Terminal modifier:

3-(N,N-dimethylaminopropyl)trimethoxysilane available from AZmax. Co.

Isopropanol: available from Kanto Chemical Co., Inc.

### Preparation 2 (synthesis of polymer (1))

A 1000-mL pressure-resistant vessel in which the air was sufficiently replaced by nitrogen was charged with

600 mL of cyclohexane, 12.6 mL (11.4 g) of styrene, 71.0 mL (41.0 g) of butadiene, 0.29 g of monomer (1), and 0.11 mL of tetramethylethylenediamine. Then, 0.2 mL of a 1.6 M solution of n-butyllithium in hexane was added to the vessel at 40°C, and the mixture was stirred.

After three hours, 3 mL of isopropanol was added to the mixture to terminate the polymerization. An amount of 1 g of 2,6-tert-butyl-p-cresol was added to the reaction solution. Then, the reaction solution was subjected to reprecipitation with methanol, and dried under heat so as to obtain polymer (1).

Preparation 3 (synthesis of polymer (2))

A 1000-mL pressure-resistant vessel in which the air was sufficiently replaced by nitrogen was charged with 600 mL of cyclohexane, 12.6 mL (11.4 g) of styrene, 71.0 mL (41.0 g) of butadiene, 0.29 g of monomer (1), and 0.11 mL of tetramethylethylenediamine. Further, 0.2 mL of a 1.6 M solution of n-butyllithium in hexane was added to the vessel at 40°C, and the mixture was stirred.

After three hours, 0.5 mL (0.49 g) of 3-(N,N-dimethylaminopropyl)trimethoxysilane (modifier) was added to the mixture, and the resulting mixture was stirred.

After one hour, 3 mL of isopropanol was added thereto to terminate the polymerization. After the addition of 1 g of 2, 6-tert-butyl-p-cresol to the reaction solution, the reaction mixture was reprecipitated with methanol, and dried under heat so as to obtain polymer (2).

(Measurement of weight average molecular weight Mw)

The weight average molecular weight (Mw) was determined using a device of GPC-8000 series available from Tosoh Corporation and a differential refractometer as the detector. The molecular weight was calibrated with polystyrene standards.

(Measurement of content of nitrogen-containing compound-derived monomer in polymer)

The content of the nitrogen-containing compound-derived monomer in the polymer (the monomer (1) content) was determined using a device of JNM-ECA series available from JEOL Ltd.

The chemical agents used in the examples and the comparative examples are listed below.

SBR: E15 available from Asahi Kasei Chemicals Corporation

Polymer (1): main chain-modified SBR (produced in Preparation 2; Mw: $3.0 \times 10^5$; monomer (1) content: 1.0% by mass)

Polymer (2): main chain- and terminal-modified SBR (produced in Preparation 3; Mw: $3.0 \times 10^5$; monomer (1) content: 1.0% by mass)

NR: RSS#3

Silica: ULTRASIL VN3 ($N_2SA$: 175 $m^2/g$) available from Degussa

Carbon black: DIABLACK N220 ($N_2SA$: 114 $m^2/g$) available from Mitsubishi Chemical Corporation

Silane coupling agent (1): Si69 (bis(3-triethoxysilylpropyl)tetrasulfide) available from Degussa

Silane coupling agent (2): NXT-Z45 (copolymer of the linking unit A and the linking unit B; linking unit A: 55 mol%; linking unit B: 45 mol%) available from Momentive

Silane coupling agent (3): Si75 (bis(3-triethoxysilylpropyl)disulfide), available from Degussa

Silane coupling agent (4): Si363 (silane coupling agent represented by a formula shown below (i.e., formula (1) wherein $R^{21}$ = $-O-(C_2H_4-O)_5-C_{13}H_{27}$, $R^{22}$ = $C_2H_5-O-$, $R^{23}$ = $-O- C_2H_4-O)_5-C_{13}H_{27}$, $R^{24}$ = $-C_3H_6-$), available from Degussa

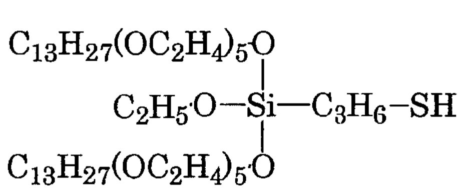

Zinc oxide: zinc oxide #1 available from Mitsui Mining & Smelting Co., Ltd.

Stearic acid: stearic acid "Tsubaki" available from NOF Corporation

Antioxidant (1): Antigene 6C (N-(1,3-dimethylbutyl)-N'-phenyl-p-phenylenediamine) available from Sumitomo Chemical Co., Ltd.

Antioxidant (2): Antigene 3C available from Sumitomo Chemical Co., Ltd.

Wax: SUNNOC N available from Ouchi Shinko Chemical Industrial Co., Ltd.

Oil (1): Process X-140 available from Japan Energy Corporation

Oil (2) : Diana Process Oil AH-25 available from Idemitsu Kosan Co., Ltd.
Sulfur: powdered sulfur available from Karuizawa Iou K. K.
Vulcanization accelerator (1): Nocceler CZ (N-cyclohexyl-2-benzothiazolylsulfenamide) available from Ouchi Shinko Chemical Industrial Co., Ltd.
Vulcanization accelerator (2): Nocceler D (N,N'-diphenylguanidine) available from Ouchi Shinko Chemical Industrial Co., Ltd.
Vulcanization accelerator (3): Soxinol CZ available from Sumitomo Chemical Co., Ltd.
Vulcanization accelerator (4): Soxinol D available from Sumitomo Chemical Co., Ltd.

Examples and Comparative Examples

According to each formulation shown in Tables 1 and 2, ingredients except the sulfur and the vulcanization accelerators were kneaded in a Banbury mixer at 150°C for three minutes, whereby a kneaded mixture was obtained. Subsequently, the sulfur, the vulcanization accelerators, and crosslinking agent were added to the kneaded mixture, and then the resulting mixture was kneaded with an open roll mill at 50°C for five minutes, whereby an unvulcanized rubber composition was obtained. The thus obtained unvulcanized rubber composition was molded into the shape of a tread, assembled with other tire components to form a tire, and the tire was vulcanized at 170°C for 10 minutes to produce a test tire (tire size: 195/65R15).

The thus obtained test tires were evaluated as follows. Tables 1 and 2 show the results.

(Rolling resistance)

A rolling resistance tester was used to measure the rolling resistance of the test tires when these tires were tested under the following conditions: rim of 15 × 6JJ, internal pressure of 230 kPa, load of 3.43 kN, and speed of 80 km/h. The measured value was converted into an index by the equation shown below. A higher index indicates a lower rolling resistance and better fuel economy.

(Rolling resistance index) = (rolling resistance of Comparative Example 1 or 5)/(rolling resistance of each composition) × 100

(Wet grip performance)

A vehicle on which the test tires were mounted was run on a wet asphalt road, and the braking distance with an initial speed of 100 km/h was measured. The measured value was converted into an index by the equation shown below. A larger index indicates better wet grip performance (wet skid performance).

(Wet grip performance index) = (braking distance of Comparative Example 1 or 5)/(braking distance of each composition) × 100

(Abrasion resistance)

A vehicle on which the test tires were mounted was driven in a city area, and the running distance corresponding to a reduction of the groove depth by 1 mm was calculated from the reduction of the groove depth after driving 8000 km. The calculated value was converted into an index by the following formula. A larger index indicates better abrasion resistance.

(Abrasion resistance index) = (running distance of each composition)/(running distance of Comparative Example 1 or 5) × 100

(Handling Stability)

A typical passenger vehicle equipped with the test tires was subjected to sensory evaluation (steering response) on a test course. Relative evaluation was made compared to the results of Comparative Example 5 that were given 5.5

points. A higher score indicates better handling stability.

[Table 1]

| | | Comparative Example 1 | Comparative Example 2 | Comparative Example 3 | Comparative Example 4 | Example 1 | Example 2 | Example 3 | Example 4 |
|---|---|---|---|---|---|---|---|---|---|
| Composition (parts by mass) | SBR | 70 | — | — | 70 | — | — | — | — |
| | Polymer (1) | — | 70 | — | — | 70 | — | 60 | 60 |
| | Polymer (2) | — | — | 70 | — | — | 70 | — | — |
| | NR | 30 | 30 | 30 | 30 | 30 | 30 | 40 | 40 |
| | Silica | 75 | 75 | 75 | 75 | 75 | 75 | 75 | 75 |
| | Carbon black | 10 | 10 | 10 | 10 | 10 | 10 | 10 | 10 |
| | Silane coupling agent (1) | 6 | 6 | 6 | — | — | — | — | — |
| | Silane coupling agent (2) | — | — | — | 6 | 6 | 6 | 6 | 3 |
| | Zinc oxide | 3 | 3 | 3 | 3 | 3 | 3 | 3 | 3 |
| | Stearic acid | 2 | 2 | 2 | 2 | 2 | 2 | 2 | 2 |
| | Antioxidant (1) | 2 | 2 | 2 | 2 | 2 | 2 | 2 | 2 |
| | Wax | 2 | 2 | 2 | 2 | 2 | 2 | 2 | 2 |
| | Oil (1) | 20 | 20 | 20 | 20 | 20 | 20 | 20 | 20 |
| | Sulfur | 2 | 2 | 2 | 2 | 2 | 2 | 2 | 2 |
| | Vulcanization accelerator (1) | 1.5 | 1.5 | 1.5 | 1.5 | 1.5 | 1.5 | 1.5 | 1.5 |
| | Vulcanization accelerator (2) | 1.2 | 1.2 | 1.2 | 1.2 | 1.2 | 1.2 | 1.2 | 1.2 |
| Evaluation | Rolling resistance index | 100 | 110 | 112 | 104 | 118 | 123 | 115 | 112 |
| | Wet grip performance index | 100 | 105 | 107 | 106 | 113 | 117 | 110 | 107 |
| | Abrasion resistance index | 100 | 102 | 104 | 110 | 115 | 117 | 112 | 107 |

[Table 2]

| | | Comparative Example 5 | Comparative Example 6 | Comparative Example 7 | Comparative Example 8 | Example 5 | Example 6 | Example 7 | Example 8 |
|---|---|---|---|---|---|---|---|---|---|
| Composition (parts by mass) | SBR | 70 | - | - | 70 | - | - | - | - |
| | Polymer (1) | - | 70 | - | - | 70 | - | - | - |
| | Polymer (2) | - | - | 70 | - | - | 70 | 60 | 60 |
| | NR | 30 | 30 | 30 | 30 | 30 | 30 | 40 | 40 |
| | Silica | 75 | 75 | 75 | 75 | 75 | 75 | 75 | 75 |
| | Carbon black | 10 | 10 | 10 | 10 | 10 | 10 | 10 | 10 |
| | Silane coupling agent (3) | 6 | 6 | 6 | - | - | - | - | - |
| | Silane coupling agent (4) | - | - | - | 6 | 6 | 6 | 6 | 3 |
| | Oil (2) | 20 | 20 | 20 | 20 | 20 | 20 | 20 | 20 |
| | Antioxidant (2) | 1.5 | 1.5 | 1.5 | 1.5 | 1.5 | 1.5 | 1.5 | 1.5 |
| | Stearic acid | 2 | 2 | 2 | 2 | 2 | 2 | 2 | 2 |
| | Zinc oxide | 3 | 3 | 3 | 3 | 3 | 3 | 3 | 3 |
| | Wax | 1 | 1 | 1 | 1 | 1 | 1 | 1 | 1 |
| | Sulfur | 1.5 | 1.5 | 1.5 | 1.5 | 1.5 | 1.5 | 1.5 | 1.5 |
| | Vulcanization accelerator (3) | 1.8 | 1.8 | 1.8 | 1.8 | 1.8 | 1.8 | 1.8 | 1.8 |
| | Vulcanization accelerator (4) | 1.2 | 1.2 | 1.2 | 1.2 | 1.2 | 1.2 | 1.2 | 1.2 |
| Evaluation | Rolling resistance index | 100 | 108 | 109 | 104 | 117 | 121 | 114 | 110 |
| | Wet grip performance index | 100 | 106 | 105 | 105 | 112 | 116 | 109 | 106 |
| | Abrasion resistance index | 100 | 101 | 102 | 104 | 114 | 116 | 110 | 105 |
| | Handling stability index | 5.5 | 5.5 | 6 | 6 | 6 | 6 | 6 | 6 |

As shown in Table 1, the examples, which used a combination of silica, a specific silane coupling agent, and a modified SBR containing a specific nitrogen-containing compound in the main chain, exhibited better fuel economy and wet grip performance than the comparative examples, and these examples also exhibited good abrasion resistance and handling stability. Moreover, it is demonstrated that the combined use of the above components synergistically improved fuel economy and abrasion resistance, as compared with the comparative examples in which either the modified SBR or the specific silane coupling agent was contained. Moreover, the examples, in which a terminally-modified SBR

was used, achieved higher levels of fuel economy, wet grip performance, and abrasion resistance.

## Claims

**1.** A rubber composition for a tire, comprising:

a rubber component comprising a modified styrene butadiene rubber that contains a constitutional unit derived from a nitrogen-containing compound in a main chain;
silica; and
at least one silane coupling agent,
the nitrogen-containing compound being represented by the following formula:

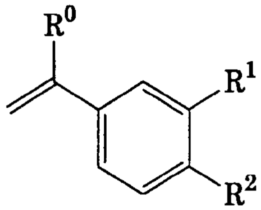

wherein $R^0$ represents a hydrogen atom, a C1-C30 aliphatic hydrocarbon group, a C3-C30 alicyclic hydrocarbon group, or a C5-C30 aromatic hydrocarbon group; $R^1$ and $R^2$ are the same or different and each represent a hydrogen atom,

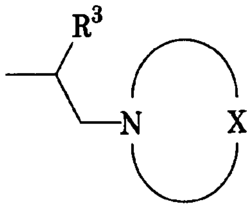

,

or

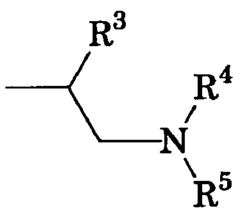

,

provided that at least one of $R^1$ and $R^2$ is not a hydrogen atom; $R^3$ represents a hydrogen atom or a C1-C4 hydrocarbon group; X represents a divalent saturated hydrocarbon group optionally containing nitrogen, oxygen, or sulfur, and optionally substituted with

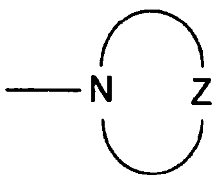

or

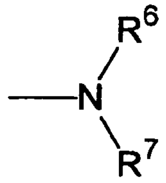

wherein Z represents a divalent saturated hydrocarbon group optionally containing nitrogen, oxygen, or sulfur; and $R^4$ to $R^7$ are the same or different and each represent a hydrogen atom, a C1-C30 aliphatic hydrocarbon group, a C3-C30 alicyclic hydrocarbon group, a C5-C30 aromatic hydrocarbon group, or a heterocyclic group having 3 to 30 ring member atoms, and
the at least one silane coupling agent being selected from the group consisting of a silane coupling agent represented by the following formula (1) and a silane coupling agent comprising linking units A represented by the following formula (2) and linking units B represented by the following formula (3):

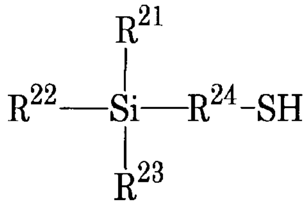

(1)

wherein $R^{21}$ represents a group represented by $-O-(R^{25}-O)_t-R^{26}$ in which t pieces of $R^{25}$ are the same or different and each represent a branched or unbranched C1-C30 divalent hydrocarbon group; $R^{26}$ represents a branched or unbranched C1-C30 alkyl group, a branched or unbranched C2-C30 alkenyl group, a C6-C30 aryl group, or a C7-C30 aralkyl group; and t represents an integer of 1 to 30; $R^{22}$ and $R^{23}$ are the same or different and each represent a group as defined for $R^{21}$, a branched or unbranched C1-C12 alkyl group, or a group represented by $-O-R^{27}$ in which $R^{27}$ represents a hydrogen atom, a branched or unbranched C1-C30 alkyl group, a branched or unbranched C2-C30 alkenyl group, a C6-C30 aryl group, or a C7-C30 aralkyl group; and $R^{24}$ represents a branched or unbranched C1-C30 alkylene group;

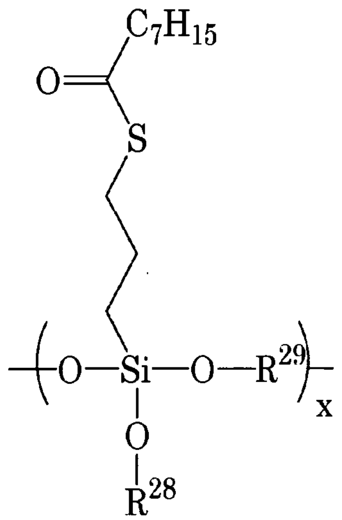

(2)

and

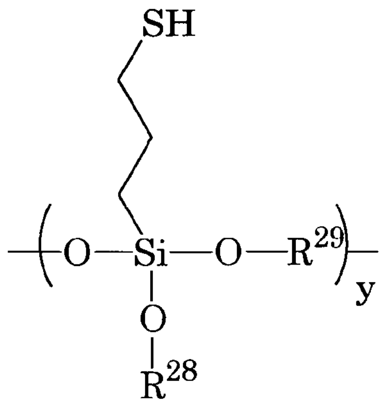

(3)

wherein x is an integer of 0 or greater; y is an integer of 1 or greater; $R^{28}$ represents a hydrogen atom, a halogen atom, a branched or unbranched C1-C30 alkyl or alkylene group, a branched or unbranched C2-C30 alkenyl or alkenylene group, a branched or unbranched C2-C30 alkynyl or alkynylene group, or the alkyl or alkenyl group that is terminally substituted with a hydroxy or carboxyl group; $R^{29}$ represents a hydrogen atom, a branched or unbranched C1-C30 alkylene or alkyl group, a branched or unbranched C2-C30 alkenylene or alkenyl group, or a branched or unbranched C2-C30 alkynylene or alkynyl group; and a pair of $R^{28}$ and $R^{29}$ may form a ring structure.

2. The rubber composition for a tire according to claim 1, wherein the modified styrene butadiene rubber is contained in an amount of 5% by mass or more based on 100% by mass of the rubber component.

3. The rubber composition for a tire according to claim 1 or 2, wherein the modified styrene butadiene rubber is a polymer in which at least one terminal is further modified by a modifier containing a functional group containing at least one selected from the group consisting of nitrogen, oxygen, and silicon.

4. The rubber composition for a tire according to any of claims 1 to 3, which is for use in a tread.

5. A pneumatic tire, formed from the rubber composition according to any of claims 1 to 4.

**Patentansprüche**

1. Kautschukzusammensetzung für einen Reifen enthaltend:

eine Kautschukkomponente enthaltend ein modifizierten Styrol-Butadien-Kautschuk, welcher in der Hauptkette eine konstitutionellen Einheit aufweist, die von einer ein Stickstoffatom enthaltenden Verbindung stammt, Silica und
wenigstens ein Silankupplungsmittel,
wobei die Stickstoff enthaltene Verbindung durch die nachfolgende Formel wiedergegeben wird:

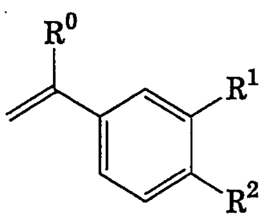

worin $R^0$ ein Wasserstoffatom, eine aliphatische $C_1$-$C_{30}$-Kohlenwasserstoffgruppe, eine alicyclische $C_3$-$C_{30}$-Kohlenwasserstoffgruppe oder eine aromatische $C_5$-$C_{30}$-Kohlenwasserstoffgruppe ist; $R^1$ und $R^2$ gleich

oder verschieden voneinander sind und jeweils ein Wasserstoffatom,

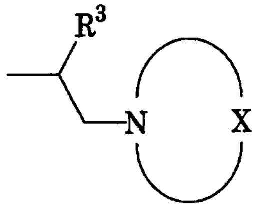

oder

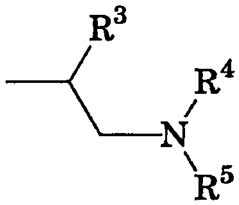

bedeuten, mit der Maßgabe, dass wenigstens einer von $R^1$ und $R^2$ kein Wasserstoffatom ist, $R^3$ ein Wasserstoffatom oder eine $C_1$-$C_4$-Kohlenwasserstoffgruppe ist, X eine divalente gesättigte Kohlenwasserstoffgruppe ist, die optional Stickstoff, Sauerstoff oder Schwefel enthält und optional substituiert ist mit

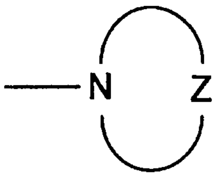

oder

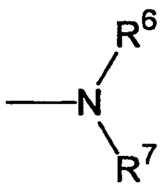

worin Z eine divalente gesättigte Kohlenwasserstoffgruppe bedeutet, welche optional Stickstoff, Sauererstoff oder Schwefel enthält, und $R^4$ bis $R^7$ gleich oder verschieden voneinander sind und jeweils ein Wasserstoffatom, eine aliphatische $C_1$-$C_{30}$-Kohlenwasserstoffgruppe, eine alicyclische $C_3$-$C_{30}$-Kohlenwasserstoffgruppe, eine aromatische $C_5$-$C_{30}$-Kohlenwasserstoffgruppe oder eine heterocyclische Gruppe mit 3 bis 30 Ringatom sind, und

das wenigstens eine Silankupplungsmittel aus der Gruppe ausgewählt ist, welche aus einem Silankupplungsmittel wiedergegeben durch die nachfolgende Formel (1) und einem Silankupplungsmittel, das durch die folgende Formel (2) wiedergegebene Verbindungsgruppen A und durch die nachfolgende Formel (3) wiedergegebene Verbindungsgruppen B enthält, besteht:

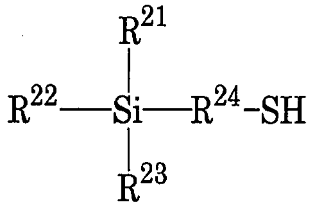

(1)

worin $R^{21}$ eine Gruppe wiedergegeben durch $-O-(R^{25}-O)_t-R^{26}$ ist, in der t Teile von $R^{25}$ gleich oder verschieden sind jeweils eine verzweigte oder unverzweigte divalente $C_1$-$C_{30}$-Kohlenwasserstoffgruppe sind, $R^{26}$ eine verzweigte oder unverzweigte $C_1$-$C_{30}$-Alkylgruppe, eine verzewigte oder unverzweigte $C_2$-$C_{30}$-Alkenylgruppe, eine $C_6$-$C_{30}$-Arylgruppe oder eine $C_7$-$C_{30}$-Aralkylgruppe ist und t eine ganze Zahl zwischen 1 und 30 bedeutet, $R^{22}$ und $R^{23}$ gleich oder verschieden voneinander sind und jeweils eine Gruppe wie für $R^{21}$ definiert, eine verzweigte oder unverzweigte $C_1$-$C_{12}$-Alkylgruppe oder eine Gruppe wiedergegeben durch $-O-R^{27}$ ist, in der $R^{27}$ ein Wasserstoffatom, eine verzweigte oder unverzweigte $C_1$-$C_{30}$-Alkylgruppe, eine verzweigte oder unverzweigte $C_2$-$C_{30}$-Alkenylgruppe, eine $C_6$-$C_{30}$-Arylgruppe oder eine $C_7$-$C_{30}$-Aralkylgruppe ist und $R^{24}$ eine von einer verzweigten oder unverzweigten $C_1$-$C_{30}$-Alkylengruppe,

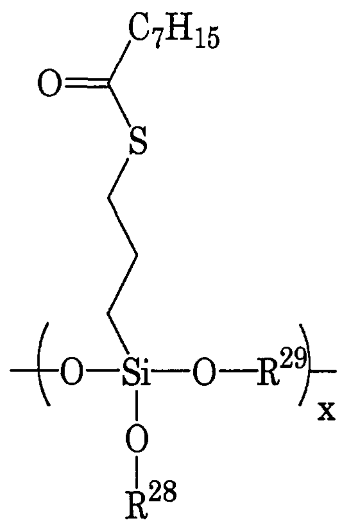

(2)

und

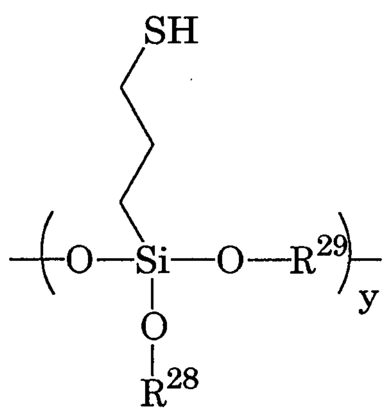

(3)

ist, worin x eine ganze Zahl von 0 oder größer ist, y eine ganze Zahl von 1 oder größer ist, $R^{28}$ ein Wasserstoffatom, ein Halogenatom, eine verzweigte oder unverzweigte $C_1$-$C_{30}$-Alkyl- oder Alkylengruppe, eine verzweigte oder unverzweigte $C_2$-$C_{30}$-Alkenyl- oder Alkenylengruppe, eine verzweigte oder unverzweigte $C_2$-$C_{30}$-Alkinyl- oder Alkinylengruppe ist oder ein terminal mit einer Hydroxy- oder Carboxylgruppe substituierte Alkyl- oder Alkenylgruppe ist, $R^{29}$ ein Wasserstoffatom, eine verzweigte oder unverzweigte $C_1$-$C_{30}$-Alkylen- oder Alkylgruppe, eine verzweigte oder unverzweigte $C_2$-$C_{30}$- Alkenylen- oder Alkenylgruppe oder eine verzweigte oder unverzweigte $C_2$-$C_{30}$-Alkinylen- oder Alkinylgruppe ist und ein Paar von $R^{28}$ und $R^{29}$ eine Ringstruktur ausbilden kann.

2. Kautschukzusammensetzung für einen Reifen nach Anspruch 1,
wobei der modifizierte Styrol-Butadien-Kautschuk in einer Menge von 5 Massen-% oder mehr bezogen auf ein 100 Massen-% der Kautschukkomponente enthalten ist.

3. Kautschukzusammensetzung für einen Reifen nach Anspruch 1 oder 2,
wobei der modifizierte Styrol-Butadien-Kautschuk ein Polymer ist, in dem wenigstens ein Ende des Weiteren mit einem Modifizierungsmittel modifiziert ist, das eine funktionelle Gruppe enthält, die wenigstens eines ausgewählt aus der Gruppe bestehend aus Stickstoff, Sauerstoff und Silicium enthält.

4. Kautschukzusammensetzung für einen Reifen nach einem der Ansprüche 1 bis 3, welcher für die Verwendung in einer Lauffläche ist.

5. Luftreifen gebildet aus einer Kautschukzusammensetzung nach einem der Ansprüche 1 bis 4.

## Revendications

1. Composition de caoutchouc pour un pneu, comprenant :

un constituant de caoutchouc comprenant un caoutchouc de butadiène styrène modifié qui contient une unité constitutionnelle dérivée d'un composé contenant de l'azote dans une chaîne principale ;
de la silice ; et
au moins un agent de couplage de silane,
le composé contenant de l'azote étant représenté par la formule suivante :

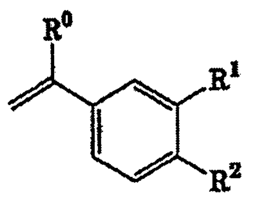

dans laquelle $R^0$ représente un atome d'hydrogène, un groupe hydrocarboné aliphatique en C1-C30, un groupe hydrocarboné alicyclique en C3-C30, ou un groupe hydrocarboné aromatique en C5-C30 ; $R^1$ et $R^2$ sont identiques ou différents et représentent chacun un atome d'hydrogène ;

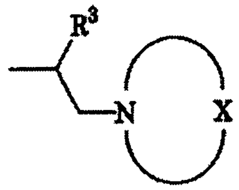

ou

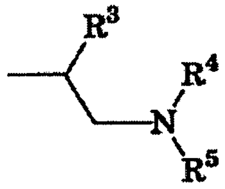

,

à condition qu'au moins un de $R^1$ et $R^2$ ne soit pas un atome d'hydrogène ; $R^3$ représente un atome d'hydrogène ou un groupe hydrocarboné en C1-C4 ; X représente un groupe hydrocarboné saturé divalent contenant éventuellement de l'azote, de l'oxygène, ou du soufre, et éventuellement substitué avec

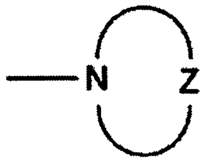

ou

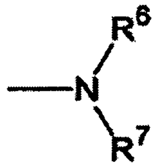

où Z représente un groupe hydrocarboné saturé divalent contenant éventuellement de l'azote, de l'oxygène, ou du soufre ; et $R^4$ à $R^7$ sont identiques ou différents et représentent chacun un atome d'hydrogène, un groupe hydrocarboné aliphatique en C1-C30, un groupe hydrocarboné alicyclique en C3-C30, un groupe hydrocarboné aromatique en C5-C30, ou un groupe hétérocyclique ayant de 3 à 30 atomes d'élément de cycle, et
le au moins un agent de couplage de silane étant choisi dans le groupe constitué d'un agent de couplage de silane représenté par la formule (1) suivante et d'un agent de couplage de silane comprenant des unités de liaison A représentées par la formule (2) suivante et des unités de liaison B représentées par la formule (3) suivante :

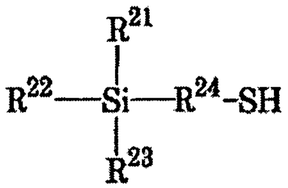

(1)

$-O-(R^{25}-O)_t-R^{26}$ dans laquelle $R^{21}$ représente un groupe représenté par $-O-(R^{25}-O)_t-R^{26}$ où les t pièces de $R^{25}$ sont identiques ou différentes et représentent chacune un groupe hydrocarboné divalent en C1-C30 ramifié ou non ramifié ; $R^{26}$ représente un groupe alkyle en C1-C30 ramifié ou non ramifié, un groupe alcényle en C2-C30 ramifié ou non ramifié, un groupe aryle en C6-C30, ou un groupe aralkyle en C7-C30 ; et t représente un nombre entier de 1 à 30 ; $R^{22}$ et $R^{23}$ sont identiques ou différents et représentent chacun un groupe comme défini pour $R^{21}$, un groupe alkyle en C1-C12 ramifié ou non ramifié, ou un groupe représenté par $-O-R^{27}$ où $R^{27}$ représente un atome d'hydrogène, un groupe alkyle en C1-C30 ramifié ou non ramifié, un groupe alcényle en C2-C30 ramifié ou non ramifié, un groupe aryle en C6-C30, ou un groupe aralkyle en C7-C30 ; et $R^{24}$ représente un groupe alkylène en C1-C30 ramifié ou non ramifié ;

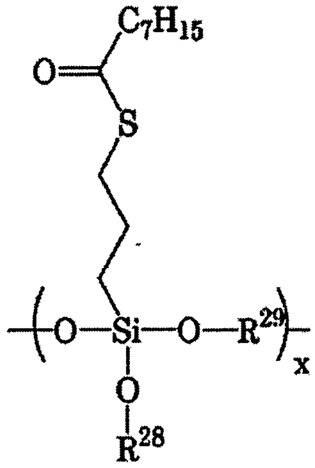

(2)

et

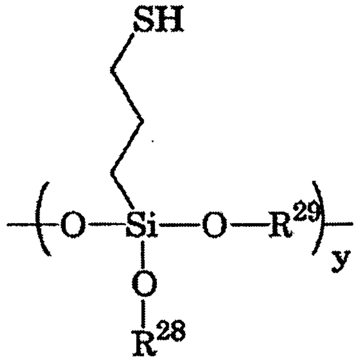

(3)

où x est un nombre entier de 0 ou supérieur ; y est un nombre entier de 1 ou supérieur ; $R^{28}$ représente un atome d'hydrogène, un atome d'halogène, un groupe alkyle ou alkylène en C1-C30 ramifié ou non ramifié, un groupe alcényle ou alcénylène en C2-C30 ramifié ou non ramifié, un groupe alcynyle ou alcynylène en C2-C30 ramifié ou non ramifié, ou le groupe alkyle ou alcényle qui est substitué en terminaison avec un groupe hydroxy ou carboxyle ; $R^{29}$ représente un atome d'hydrogène, un groupe alkylène ou alkyle en C1-C30 ramifié ou non ramifié, un groupe alcénylène ou alcényle en C2-C30 ramifié ou non ramifié, ou un groupe alcénylène ou alcynyle en C2-C30 ramifié ou non ramifié ; et une paire de $R^{28}$ et $R^{29}$ peut former une structure de cycle.

2. Composition de caoutchouc pour un pneu selon la revendication 1, dans laquelle le caoutchouc de styrène butadiène modifié est contenu dans une quantité de 5 % en masse ou supérieure rapportée à 100 % en masse du constituant de caoutchouc.

3. Composition de caoutchouc pour un pneu selon la revendication 1 ou 2, dans laquelle le caoutchouc de styrène butadiène modifié est un polymère dans lequel au moins une terminaison est encore modifiée par un agent de modification contenant un groupe fonctionnel contenant au moins un choisi dans le groupe constitué de l'azote, de l'oxygène et du silicium.

4. Composition de caoutchouc pour un pneu selon l'une quelconque des revendications 1 à 3, laquelle est destinée à une utilisation dans une bande de roulement.

5. Pneumatique, formé à partir de la composition de caoutchouc selon l'une quelconque des revendications 1 à 4.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2184318 A2
- EP 2182028 A1
- EP 2213477 A1
- EP 2177562 A2
- US 2004116635 A1
- WO 2010126095 A1
- EP 2236554 A1
- JP 2006232917 A
- US 20050277717 A1
- US 2008161458 A1
- EP 1911797 A1
- JP 2003192842 A
- JP 2010116545 A
- JP 2010116546 A